## Europäisches Patentamt

## European Patent Office

## Office européen des brevets

(11) Veröffentlichungsnummer: **0 359 993**
**A2**

## EUROPÄISCHE PATENTANMELDUNG

(21) Anmeldenummer: **89115087.2**

(22) Anmeldetag: **16.08.89**

(51) Int. Cl.5: **G01N 29/04**

(30) Priorität: **21.09.88 DE 3831971**

(43) Veröffentlichungstag der Anmeldung:
**28.03.90 Patentblatt 90/13**

(34) Benannte Vertragsstaaten:
**DE ES FR GB IT SE**

(71) Anmelder: **ROBERT BOSCH GMBH**
**Postfach 10 60 50**
**D-7000 Stuttgart 10(DE)**

(72) Erfinder: **Heinz, Rudolf, Dr. Dipl.-Ing.**
**Eltinger Weg 26**
**D-7253 Renningen(DE)**
Erfinder: **Schoor, Ulrich, Ing. grad.**
**Tuchbleiche 5**
**D-7000 Stuttgart 40(DE)**

(54) **Warneinrichtung zur Erkennung von Schäden an sich bewegenden Teilen.**

(57) Bei einer Warneinrichtung zur Erkennung von Schäden an sich bewegenden Teilen (13) ist ein Ultraschallsensor angeordnet, der nach dem Impuls-Echo-Betrieb arbeitet und zwischen Sender- und Empfängerbetrieb hin- und hergeschaltet wird. Zur sicheren Schadenserkennung wird das Meßsignal des Meßfensters (16) mit dem des Kontrollfensters (18) verglichen. Bei Verwendung eines Dauerstrich-Schallfeldes wird das Interferenzprinzip benutzt, um eine Modulationsfrequenz ($f_M$) als Signal des Riemenschadens zu erhalten. In beiden Abwandlungen kann zur weiteren Verbesserung der Schadenserkennung elektronisch eine Synchronisierung des Schadenssignals mit dem Riemenumlauf durchgeführt werden.

FIG. 1

EP 0 359 993 A2

## Warneinrichtung zur Erkennung von Schäden an sich bewegenden Teilen

Stand der Technik

Die Erfindung geht aus von einer Warneinrichtung zur Erkennung von Schäden an sich bewegenden Teilen nach der Gattung des Hauptanspruchs. Es ist bekannt, mit Hilfe von Ultraschallwellen den Zustand von Keilriemen zu überwachen. Diese Warneinrichtung hat aber den Nachteil, daß Fehlmessungen z.B. durch Regen oder Staub möglich sind.

Vorteile der Erfindung

Die erfindungsgemäße Warneinrichtung zur Erkennung von Schäden an sich bewegenden Teilen mit den kennzeichnenden Merkmalen der unabhängigen Ansprüche hat demgegenüber den Vorteil, daß der Schaden vor Eintritt des Bruchs sicher erkannt wird und der Keilrippenriemen so mit rechtzeitig ausgetauscht werden kann. Die Warneinrichtung arbeitet berührungslos, so daß keine konstruktiven Änderungen am Kraftfahrzeug notwendig sind. Sie kann als austauschbares Zusatzteil am Generator angebaut werden. Bei Puls-Echo-Betrieb können mit Hilfe einer Kontrollstrecke Fehlmessungen von einem wirklichen Riemenschaden unterschieden werden. Eine eventuell, nicht zutreffende Schadensmeldung kann elektronisch unterdrückt werden. Ferner weist die Warneinrichtung eine relativ geringe Störempfindlichkeit gegenüber Störgeräuschen auf. Da der Ultraschallkopf bei puls-Echo-Betrieb ständig zwischen Sender- und Empfängerbetrieb hin- und hergeschaltet werden kann, genügt es, nur einen Ultraschallkopf zu verwenden. Dadurch ist ein sehr platzsparender Einbau möglich. Der Sensor kann an der Riemenunterseite eingebaut werden, da dort der Riemenschaden deutlich erkennbar ist. Das Meßverfahren ist unempfindlich gegen Schwingungen des Keilriemens.

Bei sogenanntem Dauerstrich-Betrieb des Senders ist der Riemenschaden bei jeder Umdrehung detektierbar. Ferner ist dieses Verfahren unabhängig von der Lufttemperatur und damit von der Schallwellenlänge. Bei Dauerstrich-Betrieb wird der Riemenschaden als Modulationsfrequenz des Meßsignals erhalten, das als Kriterium zur elektronischen Ausschaltung von Störsignalen genutzt werden kann. Sowohl im Impuls-Echo-Betrieb als auch im Dauerstrich-Betrieb können durch elektronische Synchronisierung des Schadenssignals mit dem Riemenumlauf echte Schadenssignale von Störsignalen unterschieden werden.

Durch die in den Unteransprüchen aufgeführten Maßnahmen sind vorteilhafte Weiterbildungen und Verbesserungen der im Hauptanspruch angegebenen Merkmale möglich.

Zeichnung

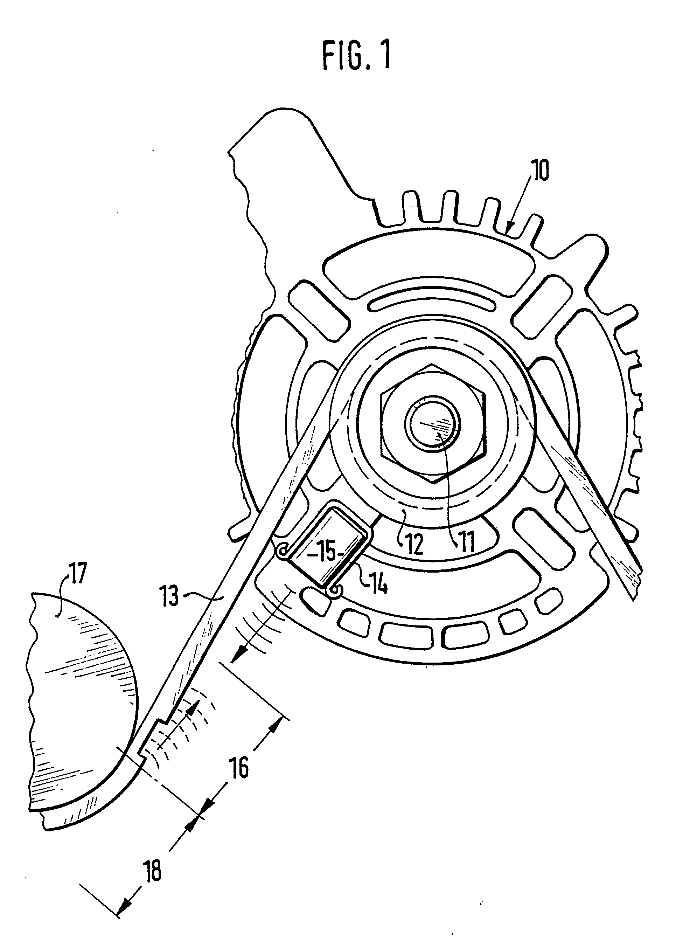

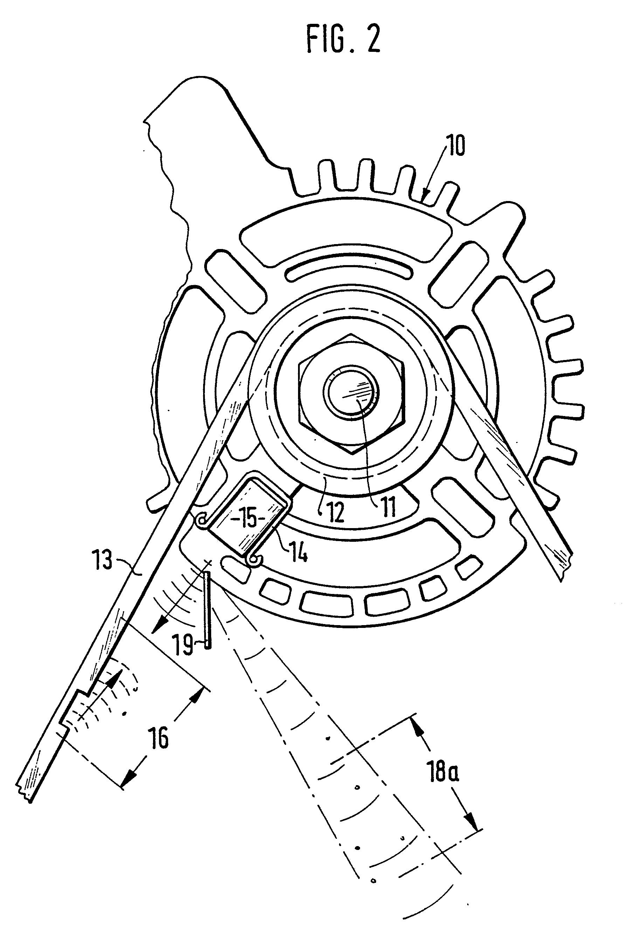

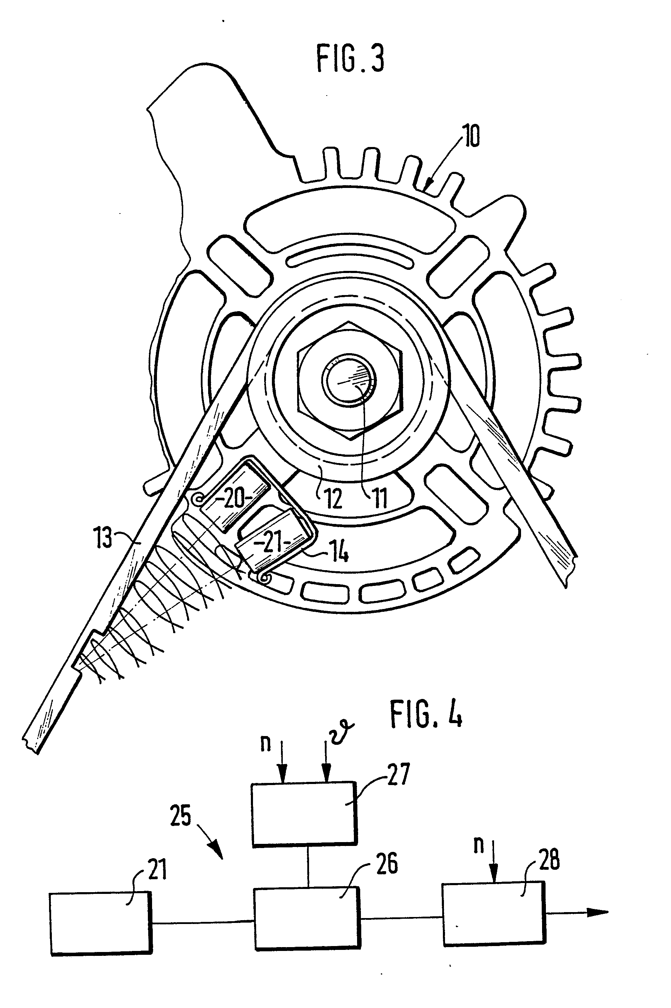

Ausführungsbeispiele der Erfindung sind in der Zeichnung dargestellt und in der nachfolgenden Beschreibung näher erläutert. Es zeigen Figur 1 einen Längsschnitt durch eine Warneinrichtung mit Impuls-EchoBetrieb, angebaut an einem Generator, Figur 2 eine Abwandlung des Ausführungsbeispiels nach Figur 1, Figur 3 einen Längs schnitt durch die Warneinrichtung bei Dauerstrich-Betrieb und Figur 4 ein Blockschaltbild.

Beschreibung der Ausführungsbeispiele

In Figur 1 ist das Gehäuse 10 eines nicht näher dargestellten Generators (Lichtmaschine) eines Kraftfahrzeugs dargestellt. Aus dem Gehäuse 10 ragt die Welle 11 des Generators, auf deren Ende eine Riemenscheibe 12 fest angeordnet ist. Über die Riemenscheibe 12 läuft ein endloser Keilrippenriemen 13 um. Dieser kann ein beliebig im Handel befindlicher Keilrippenriemen oder Keilriemen sein. In der Figur 1 ist ein Keilrippenriemen aus einer Gummimischung mit einem Zugstrang im äußeren Bereich dargestellt. Es ist aber auch eine Ausbildung mit mehreren Zugsträngen möglich. Im Bereich der Riemenscheibe 12 ist ein Träger 14 am Gehäuse 10 angeordnet, der aus glasfaserverstärktem Polyamid gefertigt ist. Am Träger 14 ist ein Sensor 15 so angebracht, daß die von ihm abgesandten Pulse auf der Unterseite des Keilriemens 13 auftreffen. Ferner sollte der Sensor 15 so angeordnet sein, daß die Pulse nahezu tangential zum gestreckten Riemen auf der Riemeninnenseite auftreffen. Man erhält dadurch einen Bereich auf der Riemeninnenseite, in den die Pulse auftreffen und der als Meßstrecke 16 bzw. als Meßfenster bezeichnet wird. Wie aus der Figur 1 ersichtlich ist, wird der Keilriemen 13 nach dem Meßfenster 16 von einem zweiten Rad 17 umgelenkt, so daß sich nach dem Meßfenster 16 ein Kontrollfenster 18 ergibt, in dessen Bereich die Pulse nicht auf den Keilriemen auftreffen.

In der Abwandlung des Ausführungsbeispiels nach Figur 2 ist es möglich, mit Hilfe eines Strahlteilers 19 einen Teil der Impulse abzulenken und so ein Kontrollfenster 18a im riemenfreien Raum zu erzeugen.

Der Sensor 15 sendet Ultraschallpulse aus, die auf der Riemeninnenseite auftreffen. Läuft der Keilriemen 13 mit einer schadhaften Stelle vorbei und befindet sich beim Auftreffen des Pulses die schadhafte Stelle im Bereich des Meßfensters 16, so wird ein Echo puls zum Sensor 15 reflektiert. Der Sensor 15 wird hierzu ständig zwischen Sender- und Empfängerbetrieb hin- und hergeschaltet. Je höher die Pulsfolge ist, desto häufiger ist die Messung, d.h. umso genauer ist die Schadensermittlung. Es ist aber auch möglich, daß sich im Meßfenster 16 befindliche Regentröpfchen oder Staubteilchen eine Reflexion der Pulse hervorrufen und somit einen Riemenschaden vortäuschen. Wird das Echo außerhalb des eingestellten Meßfensters 16 im Kontrollfenster 18 bzw. 18a zusätzlich beobachtet, so können diese Fehlpulse von den wirklichen Pulsen durch Riemenschaden unterschieden werden. Treten im Kontrollfenster 18 ebenfalls Pulse auf, so sind diese durch Regentropfen, Staubteilchen oder sonstige Verschmutzungen hervorgerufen worden. Erhält man also sowohl im Kontrollfenster 18 bzw. 18a als auch im Meßfenster 16 Impulsechos, so handelt es sich um Fehlpulse und es wird kein Riemenschaden gemeldet. Das Meßsignal des Meßfensters 16 wird von einer nicht dargestellten Auswerteschaltung unterdrückt.

Es kann aber auch Fälle geben, bei denen im Meßfenster 16 ein Riemenschaden detektiert wird und sich im Kontrollfenster 18 gleichzeitig Staubteilchen befinden. Auch in diesem Fall würde, obwohl ein Schaden vorliegen würde, kein Riemenschaden gemeldet werden, sondern die Schadensmeldung von der elektronischen Auswerteschaltung wiederum unterdrückt werden. Zur weiteren Absicherung, ob ein echter Riemenschaden vorliegt, wird elektronisch eine Synchronisierung des Schadensignals mit dem Riemenumlauf durchgeführt. Der Generator gibt für jedes Polpaar einen Sinuswellenzug ab und läßt damit über den Riemenscheibendurchmesser und die Riemenlänge eine drehzahlunabhängige Synchronisierung des Schadens auf dem Riemenumfang zu. Entsprechend der Länge des Keilriemens 13 muß sich ein Riemenschaden, unabhängig von der Drehzahl, nach einer nahezu ganzzahligen Folge von Sinusschwingungen wiederholen. Der Riemenschlupf wird hierbei vernachlässigt. Dieser Wert wird zur Unterscheidung eines echten Riemenschadens von einem Störsignal herangezogen. Falls sich also das Schadenssignal nach einem einmaligen oder mehrmaligen Umlauf des Keilriemens an derselben Stelle, d.h. nach der erwarteten Zahl von Sinusschwingungen des Generators, stets wiederholt, so kann auf einen echten Schaden rückgeschlossen werden.

Im Ausführungsbeispiel nach Figur 3 wird ein Ultraschallsender 20 und ein Ultraschallempfänger 21 verwendet, wobei der Sender 20 ein Dauerstrich-Schallfeld zum Keilriemen 13 hin aussendet. Der Sender 20 und der Empfänger 21 sind möglichst nahe nebeneinander am Träger 14 angeordnet. Zwischen dem Sender 20 und dem Empfänger 21 bildet sich somit ein Schallfeld aus. Weist der Keilriemen 13 einen Riemenschaden auf, so entsteht, wie im Ausführungsbeispiel nach Figur 1, ein Echofeld. Dieses Echofeld überlagert sich mit dem vom Sender 20 ausgestrahlten Schallfeld, so daß es zur Interferenz der beiden Felder kommt. Der Empfänger 21 empfängt während des vorbeilaufenden Riemenschadens durch Verstärkung und Auslöschung des Schallfeldes ein eine sinusförmige Hüllkurve aufweisendes, moduliertes Ultraschallsignal. Die Modulationsfrequenz $f_M$ dieses Signals ist gleich der Riemengeschwindigkeit V dividiert durch die Wellenlänge $\lambda_S$ des Ultraschalls: $f_M = V_R/\lambda_S$.

Zur Ausblendung von Störungen kann bei der Auswertung der Modulationsfrequenz $f_M$ ein proportional mit der Generatordrehzahl n und damit mit der Riemengeschwindigkeit verschiebbarer Bandpaßfilter 26 benutzt werden. Durch die zusätzliche Messung der Lufttemperatur $\vartheta$ kann der Bandpaßfilter 26 der erwarteten Modulationsfrequenz sehr eng angepaßt werden.

Das Dopplerprinzip kann angewandt werden, um aus der Modulationsfrequenz $f_M$ des Ultraschallsignals die Laufrichtung des Keilriemens zu erkennen. Es bewegt sich nämlich in der einen Laufrichtung der Schaden auf den Empfänger 21 zu, während er in der anderen Laufrichtung vom Empfänger wegläuft.

Wie bereits beim Ausführungsbeispiel nach Figur 1 kann es auch beim Dauerstrich-Schallfeld durch Verunreinigungen zu Störsignalen kommen, die einen Riemenschaden vortäuschen. Zur Unterscheidung zwischen diesen Störsignalen und eigentlichen Riemenschadensignalen kann die empfangene Modulationfrequenz $f_M$ mit der Drehzahl n des Generators 10 verglichen werden. Liegt ein echter Riemenschaden vor, so muß die Modulationsfrequenz $f_M$ des Signals etwa gleich sein der Drehzahl des Generators multipliziert mit einer Konstanten. Diese Konstante ist abhängig vom Durchmesser der verwendeten Riemenscheibe und der Wellenlänge des ausgestrahlten Ultraschalls. Für sehr exakte Messungen kann auch noch die Temperaturabhängigkeit der Ultraschallwellenlänge mit berücksichtigt werden. ·

Weiterhin kann die Synchronisierung des Schadenssignales mit der, wie im Puls-Echo-Betrieb verwendeten, Generatorsignales benutzt werden, um einen echten Riemenschaden von Störsignalen zu unterscheiden.

In der Figur 4 ist die Auswerteschaltung 25 in einem Blockschaltbild dargestellt. Das vom Empfänger 21 empfangene Meßsignal wird dem Bandpaßfilter 26 zugeführt, dessen Fenster von einer Rechnerschaltung 27 verschoben wird. In die Rechnerschaltung 27 werden die ermittelte Drehzahl n des Generators und die Lufttemperatur ϑ, möglichst der Umgebung des Keilriemens 13, eingegeben. Das Signal des Bandpaßfilters 26 wird der Einrichtung 28 zur Synchronisierung weitergeleitet, in der es wie oben beschrieben ausgewertet wird.

**Ansprüche**

1. Warneinrichtung zur Erkennung von Schäden an sich bewegenden Teilen (13), insbesondere Keilriemen bei Kraftfahrzeugen, das an mindestens einem unter einem bestimmten Winkel zum bewegten Teil angeordneten, Schallwellen aussendenden Sensor (15) vorbeigeführt wird, dadurch gekennzeichnet, daß der Sensor (15) Schallwellen im Puls-Betrieb aus sendet und zwischen Sender- und Empfängerfunktion hin- und hergeschaltet wird, und daß zusätzlich zu einem sich im Betrieb des bewegten Teils (13) befindenden Meßfensters (16) ein Kontrollfenster (18) vorhanden ist.

2. Warneinrichtung nach Anspruch 1, dadurch gekennzeichnet, daß mit Hilfe eines Strahlteilers (19) die Schallwellen teilweise zu einem Kontrollfenster (18a) hin abgelenkt werden.

3. Warneinrichtung zur Erkennung von Schäden an sich bewegenden Teilen (13), insbesondere Keilriemen bei Kraftfahrzeugen, das an mindestens einem unter einem bestimmten Winkel zum bewegten Teil angeordneten, Schallwellen aussendenden Sensor (20, 21) vorbeigeführt wird, dadurch gekennzeichnet, daß der Sensor Schallwellen im Dauerstrich-Betrieb aussendet und aus einem nebeneinander angeordneten Sender (20) und Empfänger (21) besteht und daß der Empfänger (21) das Meßsignal über die Interferenzen ermittelt, die durch das am Schaden des bewegten Teils (13) bewirkten Echofelds hervorgerufen werden.

4. Sensor nach einem der Ansprüche 1 bis 3, dadurch gekennzeichnet, daß bei einem mehrmaligen Umlauf des bewegten Teils (13) das Meßsignal des Sensors (15, 20, 21) mit dem Umlauf des Teils (13) synchronisiert ist.

5. Warneinrichtung nach einem der Ansprüche 1 bis 4, dadurch gekennzeichnet, daß die Modulationsfrequenz ($f_M$) des am Sensor (15, 20, 21) empfangenen Meßsignals mit der Drehzahl des das bewegte Teil (13) antreibenden Generators (10) verglichen wird.

6. Warneinrichtung nach einem der Ansprüche 1 bis 5, dadurch gekennzeichnet, daß der Sensor (15, 20, 21) die Unterseite des bewegten Teils (13) abtastet.

7. Warneinrichtung nach einem der Ansprüche 1 bis 6, dadurch gekennzeichnet, daß die Schallwellen im Ultraschallbereich liegen.

8. Warneinrichtung nach einem der Ansprüche 1 bis 7, dadurch gekennzeichnet, daß der Sensor (15, 20, 21) möglichst tangential zum bewegten Teil (13) angeordnet ist.

9. Warneinrichtung nach einem der Ansprüche 1 bis 8, dadurch gekennzeichnet, daß das Meßsignal einer elektronischen Auswerteschaltung zugeführt wird.

10. Warneinrichtung nach einem der Ansprüche 1 bis 9, dadurch gekennzeichnet, daß für die Auswertung der Modulationsfrequenz ($f_M$) ein in die Auswerteschaltung (25) verschaltetes Bandpaßfilter (26) proportional mit der Generatordrehzahl (n) verschoben wird.

11. Warneinrichtung nach einem der Ansprüche 1 bis 10, dadurch gekennzeichnet, daß die Lufttemperatur (ϑ) zur genauen Verschiebung des Bandpaßfilters (26) mitgemessen wird.

# FIG. 1

# FIG. 2

FIG.3

FIG. 4